# EUROPÄISCHE PATENTSCHRIFT

(11) **EP 0 687 436 B1**
(45) Veröffentlichungstag und Bekanntmachung des Hinweises auf die Patenterteilung: **15.10.1997**
(21) Anmeldenummer: 95107472.3
(22) Anmeldetag: 17.05.1995
(51) Int. Cl.: A47J 31/36

(54) **Verfahren zur Regelung einer Verdrängerpumpe für eine Espressomaschine**
Method for controlling a displacement pump for an espressomachine
Méthode pour contrôler une pompe volumétrique poru une machine à café express

(30) Priorität: 14.06.1994 DE 4420629
(43) Veröffentlichungstag der Anmeldung: 20.12.1995
(73) Patentinhaber: Braun Aktiengesellschaft, Frankfurt am Main (DE)
(72) Erfinder: Müller, Roland, D-63303 Dreieich (DE); Schotte, Dietwald, D-65760 Eschborn (DE)

(56) Entgegenhaltungen:
- EP-A- 0 531 699
- EP-A- 0 592 943
- CH-A- 457 761
- DE-A- 3 825 500
- US-A- 2 715 868
- US-A- 4 575 615
- PATENT ABSTRACTS OF JAPAN vol. 14 no. 235 (M-0975) ,18.Mai 1990 & JP-A-02 061416 (ISEKI & CO LTD) 1.März 1990,

## Beschreibung

Die Erfindung betrifft ein Verfahren zur Regelung einer Verdrängerpumpe für eine Espressomaschine nach dem Oberbegriff des Patentanspruchs 1 sowie eine Vorrichtung zur Durchführung des Verfahrens gemäß dem Oberbegriff des Patentanspruchs 9.

Espressomaschinen, bei denen der für den Durchsatz von heißem Wasser durch das Espresso-Kaffeemehl notwendige Druck durch eine Kolbenpumpe erzeugt wird, sind allgemein bekannt. Die Erhitzung von kaltem Wasser erfolgt bei vielen Espressomaschinen dadurch, daß dieses durch einen als Durchlauferhitzer wirkenden elektrisch beheizten Metallblock relativ großer Wärmekapazität (Thermoblock) gepumpt wird, nach dessen Verlassen es dann als Brühwasser in einen Kaffeemehl enthaltenden Siebkorb eintritt, der von einem Siebkorbträger gehalten wird, aus welchem das fertige Espressogetränk austritt. (Vgl. dazu z.B. DE-U 76 02 946).

Als Kolbenpumpe werden häufig sogenannte Schwingankerpumpen eingesetzt, deren Kolben aus ferromagnetischem Material besteht und durch Einschalten eines Wechsel-Magnetfeldes in Förderrichtung und zurück bewegt wird.

Derartige Schwingankerpumpen weisen die Eigenschaft auf, daß ihre Amplitude in großem Maße abhängig von dem auf den Kolben einwirkenden Lastmoment ist, welches seinerseits mit dem von dem beweglichen Kolben aufzubringenden Wasserdruck ansteigt. Bei deren Verwendung in Espressomaschinen bedeutet dies daher, daß für den Fall, daß das Kaffeemehl dem Wasserdurchsatz relativ wenig Strömungswiderstand entgegensetzt, eine größere Wassermenge pro Zeiteinheit (Volumenstrom) durch das Kaffeemehl fließt, während bei relativ größerem Strömungswiderstand nur ein relativ kleiner Volumenstrom erzeugt wird.

Diese Art der Druckerzeugung hat zwei wesentliche Nachteile. Zum einen kommt es bei einem relativ kleinen Volumenstrom zu einer relativ langen Verweildauer des Brühwassers im Thermoblock, in welchem angesichts des dort herrschenden Überdrucks das Brühwasser durchaus auch auf Temperaturen von über 100° C erhitzt werden kann. Dies führt zu einem "Verbrennen" des Espressomehls und entsprechend bitterem Geschmack des Espressokaffees, bei dessen Herstellung beste Ergebnisse dann erzielt werden, wenn das Brühwasser eine Temperatur im Bereich von 95° C bis 97° C aufweist. Umgekehrt kommt es bei relativ großem Volumenstrom zu einer kurzen Verweildauer des Brühwassers im Thermoblock und damit zu einer zu niedrigen Brühwassertemperatur.

Der Strömungswiderstand ist dabei abhängig vom Mahlgrad des Espressomehls und der Art und Weise, wie der Benutzer der Espressomaschine das Espressomehl im Siebkorb durch "stopfen" verdichtet hat, d.h., daß ein möglichst optimaler Espresso dann erzielt wird, wenn der Benutzer das Espressomehl - in Abhängigkeit vom Mahlgrad - so stopft, daß das Espressomehl eine optimale Dichte aufweist.

Aus der EP 0 531 699 A1 und der EP 0 592 943 A1 sind Espressomaschinen bekannt, bei denen die Erhitzung des Brühwassers drucklos in einem offenen Behälter erfolgt, aus welchem das für die Herstellung von Espresso auf optimaler Temperatur gehaltene Brühwasser von einer Kolbenpumpe abgesaugt und in den Siebkorb gepreßt wird. Auf diese Weise wird erreicht, daß die Temperatur des Brühwassers unabhängig vom Mahlgrad und der Verdichtung des Espressomehls ist. Es zeigt sich aber bei diesen bekannten Espressomaschinen nach wie vor, daß die Qualität des Espressos weiterhin von der Verdichtung des Espressomehls in Abhängigkeit vom Mahlgrad des Espressomehls abhängt.

Der Erfindung liegt daher das Problem zugrunde, daß die Qualität des Espressos dadurch bestimmt wird, wie fest der Benutzer das Espressomehl stopft, wobei ein Stopfen mit derselben Kraft zu einer unterschiedlichen Dichte des Espressomehls führen kann, wenn ein unterschiedlicher Mahlgrad des Espressomehls vorliegt.

Bei den eingangs der Beschreibungseinleitung bereits angesprochenen Espressomaschinen, die eine Pumpe verwendet haben, wurde diese Pumpe durchweg so geregelt, daß bei einem dichten Stopfen des Espressomehls und einer damit verbundenen geringeren Förderrate, d.h. in erster Linie einer Erhöhung der Brühtemperatur, die Pumpe versucht, einen steigenden Druck aufzubauen, um die Förderrate zu erhöhen und damit die Brühtemperatur zu verringern. Diese Art der Regelung führt dabei zu einem unter bestimmten Bedingungen durchaus erheblichen Anstieg des Druckes des Wassers.

Bei der Anwendung des Verfahrens nach Anspruch 1 in Verbindung mit der Anordnung der Verdrängerpumpe zeigt sich, daß bei dem Brühen von Espresso ein bestimmter Druck nicht überschritten wird. Die Verdrängerpumpe ist vorzugsweise als ein- oder mehrzylindrige Kolbenpumpe ausgebildet. Wesentlich ist dabei der Zusammenhang zwischen Bewegungsfrequenz bzw. Drehzahl und Volumenstrom, der bei einer idealen Verdrängerpumpe linear ist. In Kenntnis der Erfindung läßt sich die Auswirkung auf den Druck folgendermaßen erklären:

Der Laststrom des Elektromotors entspricht einem bestimmten Lastmoment und dieses bestimmte Lastmoment entspricht wiederum einem bestimmten Druck, den die Kolbenpumpe aufzubringen hat. Da in der Verdichtungsphase von dem Elektromotor eine deutlich größere Arbeit zu leisten ist als in der Ansaugphase, liegt in der Verdichtungsphase ein erhöhter Laststrom vor. Mit dem Begriff "mittlerer Laststrom" ist dabei der Mittelwert des Laststroms in der Verdrängungs- und der Ansaugphase gemeint. Indem gemäß der Erfindung nach Anspruch 1 vermieden wird, daß der mittlere Laststrom einen vorgebbaren maximalen Wert überschreitet, wird daher sichergestellt, daß der Druck des Wassers beim Brühen von Espresso stets unterhalb eines bestimmten Wertes des Druckes bleibt. Zweckmäßigerweise wird dabei der Wert des vorgebbaren maximalen mittleren Laststroms derart eingestellt, daß der entsprechende Wert des Druckes des Wassers ca. 15 bar entspricht, was der Obergrenze für das Brühen eines optimalen Espressos entspricht. Die Regelung des mittleren Laststroms erfolgt dabei, indem die Versorgungsspannung des Elektromotors als Stellgröße verwendet wird. Handelt es sich also beispielsweise um einen Gleichstrommotor, kann die Regelung des mittleren Laststroms beispielsweise erfolgen, indem die Wechselspannung durch einen Sperrwandler in eine Gleichspannung gewandelt wird und indem die übertragene Leistung dieses Sperrwandlers als Stellgröße entsprechend eingestellt wird.

Durch die Ausbildung des Verfahrens nach Anspruch 2 wird erreicht, daß eine frühzeitige Begrenzung des mittleren Laststromes und damit des Druckes erzielbar wird. Sinnvollerweise wird diese Begrenzung dabei so ausgelegt, daß sich ein Druck einstellt, der dem Wert des Druckes entspricht, bei dem ein möglichst optimaler Espresso entsteht. Der Wert dieses Druckes liegt dabei in der Größenordnung von 12 bis 14 bar, d.h. er liegt unter dem Wert des maximalen Druckes, bei dem ein noch als optimal zu bezeichnender Espresso entsteht. Durch die frühzeitige Begrenzung des mittleren Laststroms wird dabei über einen weiteren Arbeitsbereich dieser optimale Wert des Arbeitsdruckes der Espressomaschine erzielt. Erst wenn mit diesem Wert des Druckes die Förderrate auf Null zu sinken droht, kann durch eine nochmalige Erhöhung des Arbeitsdruckes versucht werden, eine Restförderrate zu erzielen, mit einem Wert des Druckes, der einen noch als optimal zu bezeichnenden Espresso erzeugt.

Durch die Ausgestaltung des Verfahrens gemäß Anspruch 3 wird erreicht, daß ein bestimmter Mindestdruck zur Erzielung eines optimalen Espressos möglichst schnell erreicht wird.

Mit der Ausgestaltung des Verfahrens gemäß Anspruch 4 ist es möglich, dem Benutzer anzuzeigen, inwieweit eine Begrenzung des mittleren Laststromes erfolgt, d.h. inwieweit das Espressomehl zu dicht gestopft ist. Der Benutzer kann aus dieser Anzeige für künftige Brühvorgänge entnehmen. ob er das Espressomehl dichter bzw. weniger dicht stopfen muß.

Die Ausgestaltung des Verfahrens nach Anspruch 5 stellt eine besonders einfache Ausführungsform dar, die Begrenzung des mittleren Laststroms anzuzeigen.

Mit den Maßnahmen nach Anspruch 6 wird eine Fehlanzeige der Anzeigeeinrichtung in der Anlaufphase der Kolbenpumpe vermieden. Da die Kolbenpumpe in der Anlaufphase erst einen Druck aufbauen muß, findet dort noch keine Begrenzung des mittleren Laststroms statt, so daß immer die Diode aufleuchten würde, die einen zu geringen Arbeitsdruck anzeigt. Da dies aber unter Umständen nur auf die Anlaufphase beschränkt ist und nicht den Verhältnissen entspricht, die sich einstellen, wenn die Pumpe einige Zeit läuft, ist es zweckmäßig, gemäß Anspruch 6 die Ansteuerung der Leuchtdioden in der Anlaufphase der Kolbenpumpe zu unterdrücken.

Ein Ausführungsbeispiel der Erfindung ist in der Zeichnung dargestellt und wird im folgenden näher erläutert. Es zeigen dabei:
- Fig. 1: eine Anordnung der Kolbenpumpe in einer Espressomaschine sowie ein Blockschaltbild für das erfindungsgemäße Verfahren zur Regelung der Kolbenpumpe,
- Fig. 2: eine Kennlinie des Motorstroms aufgetragen über dem geförderten Volumenstrom sowie die erfindungsgemäße Beeinflussung dieser Kennlinie bei Durchführung des Verfahrens,
- Fig. 3: die Änderung der an den Klemmen des Elektromotors anliegenden Spannung bei der Durchführung des erfindungsgemäßen Verfahrens und
- Fig. 4: die Prinzipdarstellung der Ansteuerung einer Anzeigeeinrichtung, die im Beispiel der Fig. 4 aus Leuchtdioden besteht.

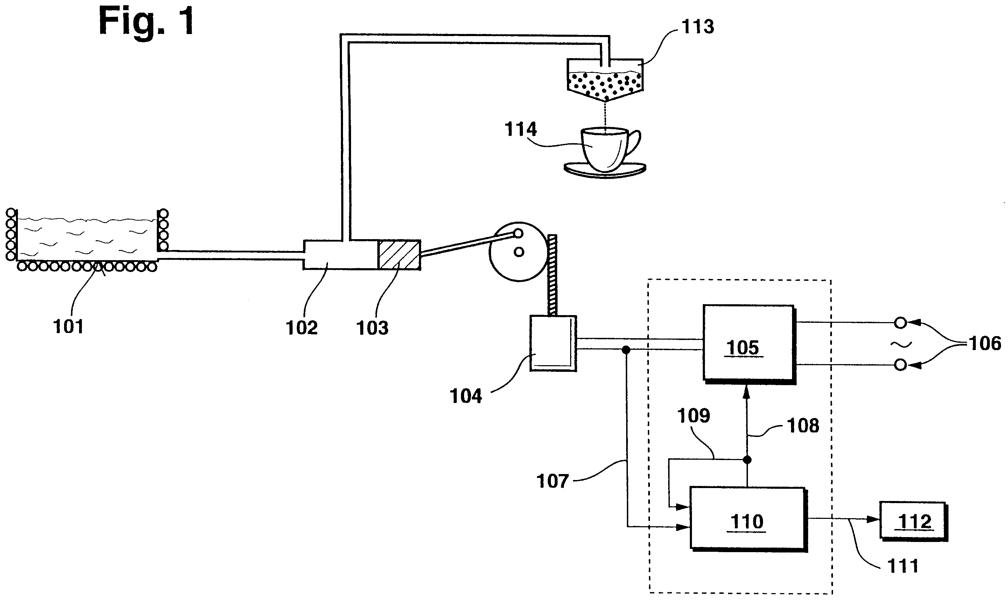

Fig. 1 zeigt einen Heizbehälter 101, in dem das Wasser zum Aufbrühen des Espressos auf die für den Aufbrühvorgang optimale Temperatur gebracht wird. Wenn das Wasser diese Temperatur erreicht hat, wird es von der Kolbenpumpe 102 durch das Espressomehl in dem Espressomehlsieb 113 hindurchgefördert. Der aufgebrühte Espresso tropft dann in den Behälter 114. In dem Ausführungsbeispiel der Fig. 1 weist die Kolbenpumpe 102 einen Kolben 103 auf, der über einen Elektromotor 104 angetrieben wird. Dieser Elektromotor 104 ist dabei mittelbar an die Netzanschlußklemmen 106 angeschlossen, das bedeutet, daß sich zwischen den Netzanschlußklemmen 106 und dem Elektromotor 104 eine Sperrwandlerschaltung 105 befindet, in der die Wechselspannung in eine Gleichspannung gewandelt wird und gleichzeitig die Größenordnung dieser Gleichspannung entsprechend den benötigten Werten für den Elektromotor eingestellt wird. Von dieser Sperrwandlerschaltung 105 aus wird der Elektromotor dann über die zwei dargestellten Leitungen mit Strom versorgt. Zur Durchführung des erfindungsgemäßen Verfahrens wird einer Regelvorrichtung 110 ein Strommeßsignal 107 zugeführt. Entsprechend diesem Strommeßsignal wird von der Regelvorrichtung 110 ein Stellsignal 108 an die Sperrwandlerschaltung 105 ausgegeben. Dieses Stellsignal 108 bewirkt dabei durch die Beeinflussung der von der Sperrwandlerschaltung 105 übertragenen Leistung eine Beeinflussung der an den Klemmen des Elektromotors 104 anliegenden externen Spannung. Die Regelung des Motorstroms kann dabei derart erfolgen, daß die an den Klemmen des Elektromotors 104 anliegende Spannung als Stellgröße und damit der mittlere Laststrom als Regelgröße derart eingestellt wird, daß ein vorgebbarer maximaler mittlerer Laststrom nicht überschritten wird.

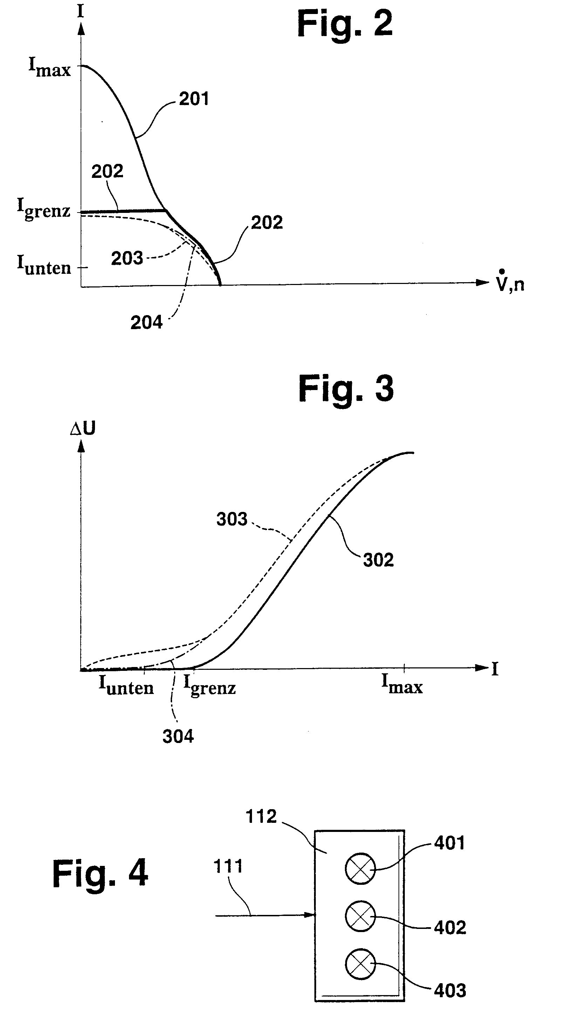

In einer verbesserten Ausführungsform wird der mittlere Laststrom so geregelt, daß der mittlere Laststrom einen konstanten Wert annimmt, wenn er den vorgebbaren maximalen mittleren Laststrom erreicht hat. In einer weiter verbesserten Ausführungsform kann die Regelung derart erfolgen, daß der mittlere Laststrom bereits reduziert wird, d.h. begrenzt wird, bevor der mittlere Laststrom den vorgebbaren maximalen mittleren Laststrom erreicht. In einer meßtechnisch einfach durchzuführenden Art und Weise dieser Art der Regelung des mittleren Laststroms wird das Stellsignal 108 über die Stellsignalrückführung 109 wiederum der Regelvorrichtung zugeführt. In dieser besonders einfachen Ausführungsform ist in der Regelvorrichtung 110 in vorteilhafter Weise eine Kennlinie abgelegt, in der der Wert der Stellgröße einem bestimmten Sollwert des mittleren Laststroms zugeordnet wird. Unter weiterer Verwendung des Strommeßsignals 107 als Istwert läßt sich also aus diesen beiden Signalen in einfacher Weise eine Regelabweichung des mittleren Laststromes ableiten. Aus dieser Regelabweichung kann dann mit dem gewünschten Zeitverhalten der Regelvorrichtung 110 ein erneutes Stellsignal 108 generiert werden. Eine mögliche Ausführungsform wird dabei im Zusammenhang mit den Figuren 2 und 3 im folgenden näher erläutert werden. In dem gezeigten Ausführungsbeispiel ist dargestellt, daß als Meß- und Regelgröße der mittlere Laststrom verwendet wird. Die Stellgröße stellt dabei eine Spannung dar. Um aus der Stellgröße einen Sollwert abzuleiten, mit dem dann die Regelgröße verglichen werden kann, muß also eine Umwandlung des Spannungswertes in einen Stromwert vorgenommen werden. Es liegt dabei selbstverständlich ebenso im Rahmen des Ausführungsbeispiels, die Vergleichbarkeit des Sollwertes mit der Regelgröße dadurch herbeizuführen, daß der Wert des mittleren Laststroms in einen Spannungswert gewandelt wird. An die Stelle der jeweiligen Werte des mittleren Laststroms bei den Figuren 2 und 3 treten dann die jeweiligen Spannungswerte.

Gemäß Fig. 1 ist es weiterhin vorgesehen, daß von der Regelvorrichtung 110 ein Ansteuersignal 111 zu einer Anzeigeeinrichtung 112 ausgegeben wird. Wegen der Zusammenhänge zwischen dem Motorstrom des Elektromotors 104 und dem entstehenden Druck in der Espressomaschine ist es damit durch Auswertung des Strommeßsignals 107 in der Regelvorrichtung 110 möglich, in der Anzeigeeinrichtung darzustellen, ob die Espressomaschine mit einem leicht zu hohen Druck, mit einem optimalen Wert des Druckes oder mit einem zu niedrigen Druck arbeitet. Diese Anzeige kann dabei kontinuierlich erfolgen oder, entsprechend der Darstellung der Fig. 4, durch drei Leuchtdioden dargestellt werden. Bei der Ausbildung der Anzeigeeinrichtung 112 gemäß der Darstellung der Fig. 4 in drei Leuchtdioden 401, 402 sowie 403 wird dabei nur angezeigt, ob der mittlere Laststrom über dem Wert des mittleren Laststroms liegt, der dem optimalen Druck für die Herstellung eines optimalen Espressos entspricht - in dem Fall leuchtet die Leuchtdiode 401 - oder ob der mittlere Laststrom im Bereich des Wertes des mittleren Laststroms liegt, der dem optimalen Druck für die Erzeugung eines optimalen Espressos entspricht - in diesem Fall leuchtet die Leuchtdiode 402 - oder ob der mittlere Laststrom einem Wert entspricht, der unterhalb des Wertes des mittleren Laststroms liegt, der dem optimalen Druck für die Erzeugung eines optimalen Espressos entspricht - in diesem Fall leuchtet die Leuchtdiode 403. In vorteilhafter Weise sind dabei die Leuchtdioden 401 und 403 in anderen Farben als die Leuchtdiode 402 ausgebildet. Es erweist sich als zweckmäßig, die Leuchtdiode 402 in grüner Farbe auszubilden sowie wenigstens eine der Leuchtdioden 401 und 403 in roter Farbe.

Die Ansteuerung des Elektromotors 104 durch Beeinflussung einer Sperrwandlerschaltung 105 ist im Ausführungsbeispiel der Fig. 1 nur exemplarisch gezeigt. Es versteht sich, daß im Rahmen der Erfindung auch andere Ausführungsarten des Elektromotors als Gleichstrommotor denkbar sind. Wesentlich ist dabei nur, daß der mittlere Laststrom des Elektromotors geregelt wird, wie in den Ansprüchen beschrieben. Wichtig ist, daß der Motor eine bijektive Kennlinie des Laststroms bezogen auf das Lastmoment aufweist.

Fig. 2 zeigt die Kennlinie des mittleren Laststroms des Elektromotors aufgetragen über der Förderrate bzw. der Drehzahl der Kolbenpumpe. Wird die an den Anschlußklemmen des Elektromotors 104 anliegende externe Versorgungsspannung nicht beeinflußt, d.h. ist diese konstant, ergibt sich ein Verlauf des Motorstroms entsprechend der Kurve 201. Der Anstieg des Wertes des mittleren Laststroms mit niedrigerer Pumpendrehzahl beruht dabei darauf, daß die aufgrund der Drehung des Elektromotors in dem Elektromotor induzierte Gegenspannung zur extern anliegenden Versorgungsspannung geringer wird, so daß die effektiv wirkende Spannung an dem Elektromotor ansteigt und mit dieser effektiv wirkenden anliegenden Spannung steigt auch der Strom des Motors und damit die Leistungsaufnahme des Motors. Der Verlauf der Kennlinie 202 besteht dabei darin, daß der Wert des mittleren Laststroms ansteigt entsprechend der Kennlinie 201, bis ein Wert I_{grenz} erreicht wird, der dem Wert des Druckes in der Espressomaschine entspricht, der maximal erreicht werden soll. Bei Erreichen dieses Wertes I_{grenz} durch den mittleren Laststrom, wird der Wert dieses mittleren Laststroms konstant geregelt. Dies ergibt sich ab diesem Punkt durch den weiteren Verlauf der Kennlinie 202.

In einer verbesserten Ausführungsform entsprechend der Kennlinie 203 wird der Wert des mittleren Laststroms bereits vor Erreichen des Wertes I_{grenz} abgeregelt. Zweckmäßigerweise wird der Wert I_{grenz} so gewählt, daß der bei diesem Wert des mittleren Laststroms entstehende Arbeitsdruck in der Espressomaschine zu einem Espresso führt, der noch als akzeptabel bezeichnet werden kann. Ein optimaler Espresso wird aber bei einem niedrigeren Arbeitsdruck der Espressomaschine erzeugt. Mit einem Kennlinienverlauf nach der Kennlinie 203 kann über einen weiteren Bereich, als bei einem Kennlinienverlauf entsprechend der Kennlinie 202 dieser optimale Wert des Arbeitsdruckes der Espressomaschine erreicht werden. Die Begrenzung des mittleren Laststroms führt also im Ergebnis dazu, daß die Leistungsaufnahme der Kolbenpumpe begrenzt wird.

Eine weitere verbesserte Ausführungsform entsprechend der Kennlinie 204 wird dadurch erreicht, daß das Abregeln des mittleren Laststroms erst dann einsetzt, wenn der mittlere Laststrom einen Mindestwert Iᵤₙₜₑₙ erreicht. Dieser Mindestwert Iᵤₙₜₑₙ des mittleren Laststroms ist dabei so bemessen, daß er einem Wert des Druckes entspricht, der als Untergrenze des Druckes zur Erzielung eines optimalen Espressos bezeichnet werden kann. In vorteilhafter Weise wird dabei diese Untergrenze des Druckes möglichst schnell erreicht.

Vorteilhaft wird durch den stetig differenzierbaren Verlauf der Kennlinien 203 und 204 gegenüber der Kennlinie 202 auch vermieden, daß die Pumpe bei der Regelung des mittleren Laststroms zwischen den zwei Betriebszuständen "stehen" und "drehen mit bestimmter Drehzahl" hin und her schwankt. Bei den Kennlinien 203 und 204 stellt sich immer ein definierter Arbeitspunkt ein.

Um nun eine unmittelbare Bestimmung des Volumenstroms bzw. der Drehzahl zu vermeiden, kann entsprechend der Fig. 3 eine weitere Kennlinie aufgetragen werden, in der die Änderung der extern an den Klemmen des Elektromotors anliegenden Versorgungsspannung über dem Wert des mittleren Laststroms aufgetragen wird. Entsprechend den einzustellenden Kennlinien 202, 203 bzw. 204 ergeben sich dabei Kennlinien 302, 303 bzw. 304. Diese Kennlinien werden dabei gewonnen, indem für jeden Sollwert des mittleren Laststroms auf einer der Kennlinien 202, 203 und 204 der Abstand senkrecht nach oben zu der Kennlinie 201 ermittelt wird. Dieser Abstand entspricht der Reduzierung des mittleren Laststroms und ist, wenn man die Impedanz des Elektromotors als rein ohmsche Impedanz betrachtet, unmittelbar proportional der Reduzierung der extern anliegenden Versorgungsspannung. Unter Berücksichtigung dieses Proportionalitätsfaktors ergeben sich daher aus der Fig. 2 die Kennlinien der Fig. 3. Die Kennlinien 302 und 304 laufen dabei vom Ursprung des Koordinatensystems ausgehend direkt auf der Ordinate und steigen ab den Werten I_{grenz} (302) bzw. Iᵤₙₜₑₙ (304) entsprechend dem weiteren Verlauf an. In entsprechender Weise können auch für andere Verläufe des mittleren Laststroms entsprechende Reduzierungen der extern anliegenden Versorgungsspannung gewonnen werden. Es ist dann möglich, für eine bestimmte Stellgröße, d.h. eine bestimmte Reduzierung der extern anliegenden Versorgungsspannung aus der zugehörigen Kennlinie der Fig. 3 einen Wert des mittleren Laststroms des Elektromotors als Sollwert zu gewinnen. Indem dieser Sollwert mit dem gemessenen Wert des mittleren Laststroms des Elektromotors verglichen wird, ergibt sich daraus die Regelabweichung, aus der unter Verwendung eines geeigneten Reglers eine erneute Stellgröße gewonnen werden kann. Die physikalischen Verhältnisses liegen dabei so, daß der sich einstellende mittlere Laststrom des Elektromotors von der Stopfungsdichte des Espressomehls abhängt. Ist dieses Espressomehl zu dicht gestopft, wird bei einer bestimmten Reduzierung der an den Klemmen des Elektromotors anliegenden Versorgungsspannung eine bestimmte Reduzierung des mittleren Laststroms erreicht. Wegen des großen Strömungswiderstands aufgrund der hohen Stopfungsdichte des Espressomehls stellt sich aber nur ein geringerer Volumenstrom ein. Dieser geringere Volumenstrom führt zu einer entsprechend niedrigen Drehzahl des Elektromotors und damit entsprechend den obigen Erläuterungen zu einem hohen Wert des mittleren Laststroms des Elektromotors. Ist dieser Wert des mittleren Laststroms des Elektromotors zu groß, muß eine noch stärkere Reduzierung der an den Klemmen des Elektromotors anliegenden Versorgungsspannung erfolgen, um die Begrenzung des mittleren Laststroms des Elektromotors durchzuführen.

## Patentansprüche

1. Verfahren zur Regelung einer Verdrängerpumpe, insbesondere Kolbenpumpe, für eine Espressomaschine, wobei die Verdrängerpumpe (102) Wasser ansaugt, welches bereits auf die für die Zubereitung von Espresso optimale Temperatur vorgeheizt ist und wobei die Verdrängerpumpe (102) von einem Elektromotor (104) angetrieben wird, wobei das vom Elektromotor (104) aufzubringende Lastmoment mit dem von der Verdrängerpumpe (102) aufzubringenden Wasserdruck ansteigt,
**dadurch gekennzeichnet,**
daß der mittlere Laststrom (I) des Elektromotors (104) derart geregelt wird, daß ein vorgebbarer maximaler mittlerer Laststrom (I_{grenz}) nicht überschritten wird, wobei der vorgebbare maximale mittlere Laststrom (I_{grenz}) kleiner ist als der Wert (Iₘₐₓ) des Laststromes, der der maximalen Leistungsaufnahme der Verdrängerpumpe (102) entspricht, und
daß zur Regelung des mittleren Laststroms (I) des Elektromotors (104) die von außen an die Klemmen des Elektromotors (104) angelegte Versorgungsspannung als Stellgröße verwendet wird und daß zur Bestimmung der Regelabweichung des mittleren Laststroms (I) der Sollwert des mittleren Laststroms aus einer Kennlinie (302, 303) bestimmt wird, in der der Wert der Stellgröße einem bestimmten Sollwert des mittleren Laststroms zugeordnet wird.

2. Verfahren nach Anspruch 1,
**dadurch gekennzeichnet,**
daß die Regelung des mittleren Laststroms (I) derart erfolgt (203), daß der mittlere Laststrom (I) bereits abgeregelt wird, bevor der mittlere Laststrom den vorgebbaren maximalen mittleren Laststrom erreicht.

3. Verfahren nach Anspruch 2,
**dadurch gekennzeichnet,**
daß die Regelung des mittleren Laststroms (I) derart erfolgt (204), daß der mittlere Laststrom (I) erst abgeregelt wird, wenn er einen Mindestwert (Iᵤₙₜₑₙ) erreicht.

4. Verfahren nach einem der Ansprüche 1 bis 3,
**dadurch gekennzeichnet,**
daß eine Anzeigeeinrichtung (112) abhängig davon angesteuert wird, ob und inwieweit eine Begrenzung des mittleren Laststroms (I) erfolgt.

5. Verfahren nach Anspruch 4,
**dadurch gekennzeichnet,**
daß die Anzeigeeinrichtung (112) aus drei Leuchtdioden (401, 402, 403) besteht, wobei eine der Leuchtdioden (401) angesteuert wird, wenn der mittlere Laststrom (I) einen solchen Wert annimmt, daß der Arbeitsdruck oberhalb des Wertes des Druckes für einen optimalen Espresso liegt, wobei eine andere Leuchtdiode (402) angesteuert wird, wenn der mittlere Laststrom (I) einen solchen Wert annimmt, daß der Arbeitsdruck innerhalb des Bereiches des Wertes des Druckes für einen optimalen Espresso liegt und wobei die dritte Leuchtdiode (403) angesteuert wird, wenn der mittlere Laststrom (I) einen solchen Wert annimmt, daß der Arbeitsdruck unter dem Wert des Druckes für einen optimalen Espresso liegt.

6. Verfahren nach Anspruch 5,
**dadurch gekennzeichnet,**
daß die Ansteuerung der Leuchtdioden (401, 402, 403) in der Anlaufphase der Kolbenpumpe (102) unterdrückt wird.

## Claims

1. A method for controlling a displacement pump, in particular a reciprocating pump, for an espresso maker, in which the displacement pump (102) draws water that has been preheated to the temperature optimum for the preparation of espresso, in which the displacement pump (102) is driven by an electric motor (104), and in which the load moment to be applied by the electric motor (104) increases with the water pressure to be applied by the displacement pump (102),
**characterized in that** the mean load current (I) of the electric motor (104) is controlled such that a predeterminable maximum mean load current (I_{grenz}) is not exceeded, with said predeterminable maximum mean load current (I_{grenz}) being smaller than the value (Iₘₐₓ) of the load current which corresponds to the maximum power input of the displacement pump (102), and that for control of the mean load current (I) of the electric motor (104), the external supply voltage applied to the terminals of the electric motor (104) is used as the actuating variable, and that, for determination of the deviation of the mean load current (I), the desired value of the mean load current is determined from a characteristic curve (302, 303) in which the value of the actuating variable is allocated to a specified desired value of the mean load current.

2. The method as claimed in claim 1,
**characterized in that** control (203) of the mean load current (I) is effected such that the mean load current (I) is controlled already before the mean load current reaches the value of the predeterminable maximum mean load current.

3. The method as claimed in claim 2,
**characterized in that** control (204) of the mean load current (I) is effected such that the mean load current (I) is not controlled until it reaches a minimum value (Iᵤₙₜₑₙ).

4. The method as claimed in any one of the claims 1 to 3,
**characterized in that** an annunciator device (112) is activated dependent on whether and to which extent the mean load current (I) is limited.

5. The method as claimed in claim 4,
**characterized in that** the annunciator device (112) is comprised of three light-emitting diodes (401, 402, 403), in which one (401) of said light-emitting diodes is activated when the mean load current (I) assumes such a value that the operating pressure is above the value of the pressure for an optimum espresso, in which another light-emitting diode (402) is activated when the mean load current (I) assumes such a value that the operating pressure is within the range of the value of the pressure for an optimum espresso, and in which the third light-emitting diode (403) is activated when the mean load current (I) assumes such a value that the operating pressure is below the value of the pressure for an optimum espresso.

6. The method as claimed in claim 5,
**characterized in that** activation of the light-emitting diodes (401, 402, 403) is suppressed in the startup phase of the reciprocating pump (102).

## Revendications

1. Procédé de régulation d'une pompe volumétrique, notamment d'une pompe à piston, pour une machine à expresso, la pompe volumétrique (102) aspirant de l'eau qui a déjà été préchauffée à la température optimale pour la préparation d'un expresso et étant entraînée par un moteur électrique (104) lequel doit fournir un couple résistant qui augmente avec la pression d'eau que doit générer la pompe volumétrique (102),
**caractérisé en ce**
que le courant de charge (I) moyen du moteur électrique (104) est régulé de façon à ce qu'il n'y ait pas dépassement d'un courant de charge moyen maximum définissable (Iₗᵢₘ), lequel est inférieur à la valeur (Iₘₐₓ) du courant de charge correspondant à la puissance absorbée maximum de la pompe volumétrique (102), et en ce
qu'à des fins de régulation du courant de charge (I) moyen du moteur électrique (104), on emploie comme variable réglante la tension d'alimentation arrivant de l'extérieur sur les bornes du moteur électrique (104) et qu'à des fins de détermination de la tolérance courante du courant de charge (I) moyen, on définit la valeur de consigne du courant de charge moyen à partir d'une courbe caractéristique (302, 303) sur laquelle la valeur de la variable réglante est affectée à une valeur de consigne donnée du courant de charge moyen.

2. Procédé selon la revendication 1
**caractérisé en ce**
que la régulation du courant de charge moyen (I) consiste (203) en ce que celui-ci est ramené à zéro avant même d'avoir atteint sa valeur moyenne maximum définissable.

3. Procédé selon la revendication 2
**caractérisé en ce**
que la régulation du courant de charge moyen (I) consiste (204) en ce que celui-ci n'est ramené à zéro que lorsqu'il atteint une valeur minimum (I_{inf}).

4. Procédé selon l'une des revendications 1 à 3
**caractérisé en ce**
qu'un dispositif d'affichage (112) est excité en fonction de l'existence et de l'étendue d'une limitation du courant de charge moyen (I).

5. Procédé selon la revendication 4
**caractérisé en ce**
que le dispositif d'affichage (112) se compose de trois diodes à luminescence (401, 402, 403), l'une (401) d'entre elles étant excitée lorsque le courant de charge moyen (I) atteint une valeur telle que la pression de service est supérieure à la valeur de pression donnant un expresso optimal alors qu'une autre diode (402) est excitée lorsque le courant de charge moyen (I) atteint une valeur telle que la pression de service se trouve dans une plage de valeurs de pression donnant un expresso optimal et que la troisième (403) est excitée lorsque le courant de charge moyen (I) atteint une valeur telle que la pression de travail est inférieure à la valeur de pression donnant un expresso optimal.

6. Procédé selon la revendication 5
**caractérisé en ce**
que l'excitation des diodes luminescentes (401, 402, 403) est supprimée pendant la phase de démarrage de la pompe à piston (102).
